(19) Europäisches Patentamt
European Patent Office
Office européen des brevets

(11) EP 1 985 220 B1

## (12) EUROPÄISCHE PATENTSCHRIFT

(45) Veröffentlichungstag und Bekanntmachung des Hinweises auf die Patenterteilung:
**25.05.2016 Patentblatt 2016/21**

(51) Int Cl.:
**A47L 11/24** *(2006.01)* **E01H 1/04** *(2006.01)*
**E01H 1/08** *(2006.01)*

(21) Anmeldenummer: **07008325.8**

(22) Anmeldetag: **24.04.2007**

(54) **Kehrsaugmaschine**

Suction sweeper

Balayeuse aspirante

(84) Benannte Vertragsstaaten:
**DE FR GB IT**

(43) Veröffentlichungstag der Anmeldung:
**29.10.2008 Patentblatt 2008/44**

(73) Patentinhaber: **Hako GmbH**
**23843 Bad Oldesloe (DE)**

(72) Erfinder:
- **Protz, Carsten**
  **23730 Altenkrempe (DE)**
- **Thormählen, Frank**
  **23843 Bad Oldesloe (DE)**

- **Katenhusen, Heinrich**
  **23843 Bad Oldesloe (DE)**

(74) Vertreter: **Uexküll & Stolberg**
**Partnerschaft von**
**Patent- und Rechtsanwälten mbB**
**Beselerstraße 4**
**22607 Hamburg (DE)**

(56) Entgegenhaltungen:
**EP-A- 0 799 938    DE-A1- 19 715 435**
**US-A- 6 117 200**

**Beschreibung**

Die vorliegende Erfindung betrifft eine Kehrsaugmaschine mit einer Kehreinrichtung, mit einem Kehrbehälter und mit einer Staubabsaugung zur Erzeugung einer Luftströmung über der Kehreinrichtung, wobei die Staubabsaugung einen Lüfter und einen in Strömungsrichtung vor dem Lüfter angeordneten Filter aufweist.

Herkömmliche Kehrsaugmaschinen weisen ein Fahrgestell sowie eine Kehreinrichtung, normalerweise eine rotierend angetriebene Kehrwalze, und einen Kehrbehälter auf. Die Maschine kann sich dabei mit Hilfe des Fahrgestells über die zu reinigende Bodenfläche bewegen, und Schmutz auf der Bodenfläche wird dabei durch die Kehreinrichtung erfasst und in den Kehrbehälter befördert.

Hierbei wird durch die Kehrwalze nicht nur relativ.grober Schmutz erfasst sondern auch Staub aufgewirbelt, sodass die Notwendigkeit besteht, diesen Staub aus dem Bereich der Kehreinrichtung abzusaugen, um zu vermeiden, dass dieser sich in der Umgebung der Kehrsaugmaschine ausbreitet. Daher ist im Bereich des Kehrbehälters zusätzlich eine Staubabsaugung mit einem Lüfter vorgesehen, die dazu ausgestaltet ist, Luft von außen über die Kehreinrichtung in Richtung des Kehrbehälters einzusaugen. Dabei weist die Staubabsaugung einen Filter auf, der Staubpartikel daran hindert, in den Bereich des Lüfters zu gelangen. Mittels der Staubabsaugung wird somit erreicht, dass von der Kehreinrichtung aufgewirbelter Staub und Staub, der sich in dem Kehrbehälter entwickelt, daran gehindert wird, aus der Kehrsaugmaschine auszutreten. Insbesondere wird auf diese Weise erreicht, dass während des Reinigungsvorgangs die groben Schmutzpartikel aufgrund ihres Gewichts unmittelbar in den Kehrbehälter gelangen und der eingezogene Staub sich an dem Filter absetzt.

An dieser Stelle taucht allerdings das Problem auf, dass sich der Filter während des Betriebs zunehmend zusetzt. Dies hat wiederum zur Folge, dass sich in Strömungsrichtung hinter dem Filter aufgrund des Betriebs des Lüfters ein immer stärkerer Unterdruck aufbaut und außerdem der Volumenstrom, der durch den Filter und damit die Staubabsaugung hindurchströmt, sich stark verringert. In der Folge nimmt die Effizienz, mit der der aufgewirbelte Staub abgesaugt wird, stark ab. Daher muss der Benutzer die Maschine von Zeit zu Zeit anhalten und den Filter reinigen. Dabei ist es wünschenswert, dass diese Reinigungsintervalle möglichst lang sind.

Bei Kehrsaugmaschinen gemäß dem Stand der Technik sind die Lüfter für die Staubabsaugung bisher danach ausgewählt worden, dass sie einen möglichst hohen maximalen Volumenstrom bereitstellen können. Dieser hohe Volumenstrom reißt allerdings sehr viele Staubpartikel mit und führt sie auf den Filter zu. Dort lagert sich dann sehr schnell viel Staub ab, der nach kurzer Zeit zur Notwendigkeit der Reinigung des Filters führt. Somit führt diese Auslegung nicht zu verlängerten Intervallen zwischen den Filterreinigungsvorgängen.

Aus der EP 0 799 938 ist eine Kehrsaugmaschine zum Anbau an ein Fahrzeug mit den Merkmalen des Oberbegriffs des Anspruchs 1 bekannt. Bei einer vorteilhaften Ausführungsform der darin beschriebenen Kehrsaugmaschine, wird ein Ventilator dazu verwendet, einen geringfügigen Unterdruck hinter einem Staubfilter aufzubauen, um nur einen Teil der staubführenden Luft durch den Filter zu führen. Der andere Teil der Luft wird durch ganz oder teilweise verschließbare Rückführkanäle zurück in den Bereich der Kehrwalze geführt. Auf diese Weise wird erreicht, dass der Staubfilter nicht so schnell verstopft.

Nachteilig an dieser Lösung ist, dass ein Lüfter, der ausgestaltet ist, einen geringen Unterdruck zu erzeugen, nicht leistungsstark genug ist, um selbst bei einem verstopften Filter einen ausreichenden Unterdruck zu erzeugen, damit ein Mindestmaß an Volumenstrom innerhalb eines Intervalls zwischen den Filterreinigungsvorgängen gewährleistet ist.

Die US 6,117,200 beschreibt ebenfalls eine mobile Kehrsaugmaschine mit den Merkmalen des Oberbegriffs des Anspruchs 1. Darin ist beschrieben, dass eine Reinigung des dem Lüfter vorgeschalteten Filters dann durchgeführt wird, wenn der Druckabfall über dem Filter eine gewisse Schwelle überschreitet. Außerdem weist die Bodenreinigungsmaschine ein Ventilelement auf, das dazu genutzt wird, die Strömungsgeschwindigkeit zu begrenzen.

Bei dieser Bodenreinigungsmaschine besteht das Problem, dass bei dem durch das Ventilelement insgesamt erhöhten Unterdruck-Niveau der Filter schneller verstopft.

Daher ist es ausgehend vom Stand der Technik die Aufgabe der vorliegenden Erfindung, eine Kehrsaugmaschine mit einer Staubabsaugung bereitzustellen, bei der die Intervalle zwischen den Reinigungsvorgängen für den Filter gegenüber dem Stand der Technik verlängert sind.

Diese Aufgabe wird dadurch gelöst, dass der Lüfter derart gewählt ist, dass dessen Kenngröße x, die das Verhältnis ist aus der Differenz ($\Delta$V) zwischen dem Volumenstrom durch den Lüfter bei unverschmutztem Filter und dem Volumenstrom durch den Lüfter bei vollständig verschmutztem Filter und aus der Differenz ($\Delta$p) zwischen dem Unterdruck in Strömungsrichtung hinter dem Filter bei vollständig verschmutztem Filter und dem Unterdruck hinter dem Filter bei unverschmutztem Filter, kleiner oder gleich 0,15 m$^3$/(h·Pa) ist. Insbesondere können der Lüfter und eine den Filter und den Lüfter miteinander verbindende Verbindungsleitung so gewählt bzw. bemessen sein, dass das zuvor genannte Kriterium erfüllt ist.

Demnach wird der Lüfter und ggf. auch die Verbindungsleitung in der Weise gewählt, dass für die Kenngröße x, die durch die folgende Beziehung

$$x = \frac{\Delta V}{\Delta p} = \frac{(V_{unverschmutzt} - V_{verschmutzt})}{(p_{verschmutzt} - p_{unverschmutzt})}$$

bestimmt wird, $x \leq 0{,}15$ gilt, wobei der Volumenstrom in $m^3$/h und der Druck in Pa gemessen werden. Der Unterdruck wird dabei in Bezug auf den Umgebungsdruck der Kehrsaugmaschine gemessen.

$P_{unverachmutzt}$ und $P_{verschmutzt}$ bzw. $V_{unverschmutzt}$ und $V_{verschmutzt}$ sind also die Werte für den Druck bzw. den Volumenstrom, die den Arbeitsbereich der Staubabsaugung begrenzen. Insbesondere sind $P_{verschmutzt}$ und $V_{verschmutzt}$ diejenigen Parameter, bei denen eine Reinigung des Filters erforderlich ist, da dann keine ausreichende Absaugung des aufgewirbelten Staubs mehr gegeben ist, sondern die Umgebung der Kehrmaschine mit Staub belastet wird.

Während die Messung des Drucks in Strömungsrichtung direkt hinter dem Filter erfolgen muss, kann der Volumenstrom durch den Filter entweder in Strömungsrichtung vor dem Filter oder dahinter gemessen werden. Der Punkt, an dem die Messung erfolgt, hat im vorliegenden Fall keinen Einfluss auf das Messergebnis, da hier die Annahme eines inkompressiblen Fluids gemacht werden kann und der Volumenstrom damit entlang des Strömungsweges konstant sein muss. Zur Messung des Volumenstroms kann in an sich bekannter Weise der Verlauf der Strömungsgeschwindigkeit durch eine von dem Luftstrom der Staubabsaugung durchströmte Querschnittsfläche gemessen werden und daraus der Volumenstrom errechnet werden. Dabei kann diese Messung der Strömungsgeschwindigkeit entweder vor dem Filter oder ggf. auch in der Verbindungsleitung zwischen Filter und Lüfter erfolgen. Es ist aber auch denkbar, dass die Messung des Volumenstroms am Auslass des Lüfters erfolgt.

Bei der erfindungsgemäßen Wahl des Lüfters und ggf. auch der Verbindungsleitung mit einer derartigen Kenngröße führt auch eine vergleichsweise hohe Zunahme des Unterdrucks hinter dem Filter zu einer nur geringen Änderung des Volumenstroms, der durch den Lüfter gefördert wird. Dadurch wird erreicht, dass insbesondere nach jeweils einer Reinigung des Filters mit einem vergleichsweise geringen Volumenstrom begonnen wird, den Staub abzusaugen. Daraus ergibt sich ein mengenmäßig geringerer Transport von Staubpartikeln in Richtung auf den Filter zu, was eine langsamere Verschmutzung des Filterelementes zur Folge hat, die sich in einem Anstieg des Luftdruckes in Strömungsrichtung betrachtet hinter dem Filter bemerkbar macht. Auf diese Weise kann die Kehrsaugmaschine länger betrieben werden, ohne dass eine Filterreinigung erforderlich ist.

Es wird also im Unterschied zum Stand der Technik nicht etwa ein Lüfter verwendet, der einen vergleichsweise hohen maximalen Volumenstrom bei relativ geringen Unterdrücken hat, dessen Volumenstrom aber bei nur geringfügiger Zunahme des Unterdrucks stark abnimmt, so dass anfangs eine hohe Staubmenge zum Filter befördert wird und mit zunehmendem Druck die den Filter beaufschlagende Staubmenge kleiner wird.

In besonders bevorzugter Weise ist die Kenngröße x kleiner oder gleich 0,1, wobei sich in diesem Fall eine weitere Verlängerung der Reinigungsintervalle bzw. eine weitere Vergleichmäßigung der Saugleistung innerhalb des Arbeitsbereichs einstellt.

In einer bevorzugten Ausführungsform weist die Staubabsaugung der Kehrsaugmaschine eine Verbindungsleitung zwischen dem Filter und dem Lüfter auf, wobei der Querschnitt der Verbindungsleitung veränderbar ist. Dabei ist es insbesondere möglich, dass in der Verbindungsleitung eine Regelklappe angeordnet ist. Dadurch ist es möglich, den Volumenstrom möglichst konstant zu halten.

Im Folgenden wird die vorliegende Erfindung anhand einer Zeichnung erläutert, die lediglich bevorzugte Ausführungsbeispiele zeigt. In der Zeichnung zeigen

Fig. 1 ein erstes bevorzugtes Ausführungsbeispiel einer erfindungsgemäßen Kehrsaugmaschine,

Fig. 2 eine Darstellung der Kennlinie des Luftabsaugungssystems aus Lüfter und Verbindungsleitung einer erfindungsgemäßen Kehrsaugmaschine und

Fig. 3 ein zweites bevorzugtes Ausführungsbeispiel einer erfindungsgemäßen Kehrsaugmaschine.

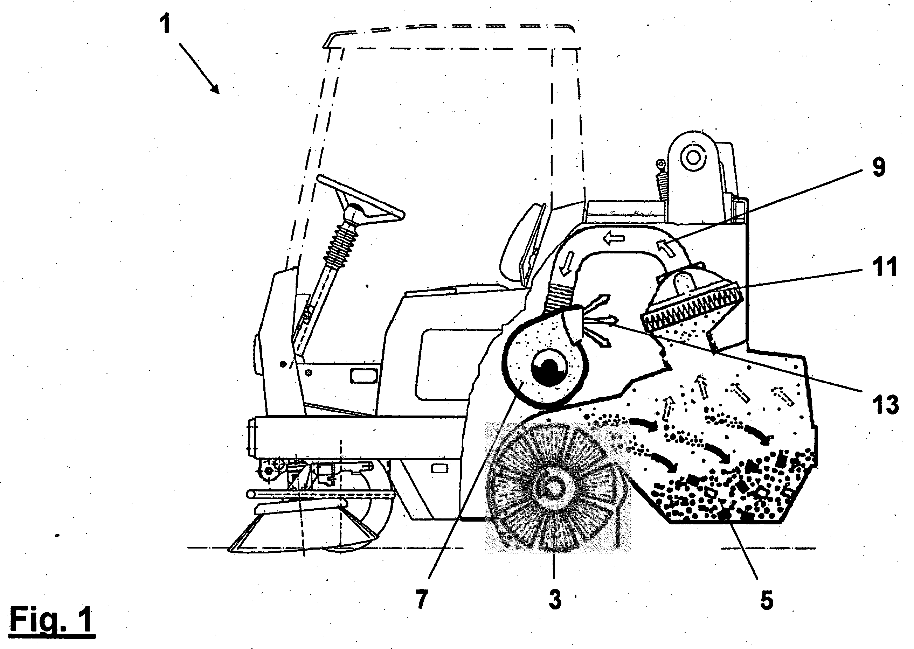

In Fig. 1 ist eine Kehrsaugmaschine 1 dargestellt, die ein Fahrgestell aufweist, um sich über die zu reinigende Bodenfläche bewegen zu können, und die mit einer Kehreinrichtung versehen ist. Die Kehreinrichtung ist als eine Kehrwalze 3 ausgebildet, die um eine Achse senkrecht zur Fahrtrichtung der Kehrsaugmaschine 1 drehend angetrieben ist. In Fahrtrichtung gesehen hinter der Kehrwalze 3 ist ein Kehrbehälter 5 angeordnet, in den der von der Kehrwalze 3 erfasste Schmutz gefördert wird, wobei die Kehrwalze 3 in Fig. 1 gesehen mit dem Uhrzeigersinn rotiert.

Des Weiteren ist oberhalb des Kehrbehälters 5 eine Staubabsaugung angeordnet. Die Staubabsaugung weist einen Lüfter 7 auf, der über eine Verbindungsleitung 9 mit einem Filter 11 verbunden ist. Die Staubabsaugung dient dazu, Staub, der durch die Kehrwalze 3 aufgewirbelt und zunächst in den Bereich des Kehrbehälters 5 gefördert wird, sowie in dem Kehrbehälter 5 entstehenden Staub abzusaugen und insbesondere zu verhindern, dass dieser Staub in die Umgebung der Kehrmaschine 1 abgegeben wird. Der Lüfter 7 kann insbesondere als Axial- oder Radiallüfter ausgebildet sein.

Zum Absaugen des Staubs saugt der Lüfter 7 staubbelastete Luft durch den Filter 11 und die Verbindungsleitung 9 an und stößt die Luft durch einen Auslass 13 aus. Dabei lagert sich der Staub an dem Filter 11 ab. Diese Ablagerung hat zur Folge, dass sich mit zunehmender Betriebsdauer und damit zunehmender Verschmutzung in Strömungsrichtung hinter dem Filter 11 in der Verbindungsleitung 9 ein zunehmender Unterdruck in Bezug auf den Umgebungsdruck der Kehrsaugmaschine 1 aufbaut. In Abhängigkeit von der Wahl des Lüfters 7 und der Auslegung der Verbindungsleitung 9 führt dieser zunehmende Unterdruck zu einer Abnahme des Luftvolumenstromes durch den Lüfter 7 und damit auch zu einer Abnahme der Effizienz, mit der die Staubabsaugung den Staub im Bereich des Kehrbehälters 5 absaugt. Wenn der Volumenstrom zu stark abgesunken ist, muss die Kehrmaschine 1 gestoppt und der Filter 11 gereinigt werden.

Um zum einen zu erreichen, dass die Intervalle zwischen den Filterreinigungsvorgängen möglichst lang sind und die Verschmutzung des Filters unmittelbar nach einer Reinigung nicht überproportional zunimmt, ist der Lüfter 7 erfindungsgemäß so gewählt, dass für die Kenngröße x, die definiert ist durch die Gleichung

$$x = \frac{\Delta V}{\Delta p} = \frac{(V_{unverschmutzt} - \dot{V}_{verschmutzt})}{(p_{verschmutzt} - p_{unverschmutzt})},$$

gilt, dass $x \leq 0,15$ und in bevorzugter Weise $x \leq 0,1$ ist. $V_{un-verschmutzt}$ bzw. $V_{verschmutzt}$ sind die Volumenströme durch den Lüfter 7 bei unverschmutztem bzw. bei vollständig verschmutztem Filter 11, wobei es bei Letzterem erforderlich ist, den Filter 11 zu reinigen, um eine Staubentwicklung in der Umgebung der Kehrsaugmaschine 1 zu vermeiden. In analoger Weise sind $p_{unver-schmutz}$ und $P_{verschmutzt}$ die entsprechenden Unterdrücke, die sich bei unverschmutztem bzw. verschmutztem Filter 11 dahinter in Folge des Betriebs des Lüfters 7 ausbilden. Zur Bestimmung der Kenngröße x werden die Volumenströme in $m^3/h$ und die Drücke in Pa gemessen.

Die Unterdrücke müssen in Strömungsrichtung direkt hinter dem Filter 11 gemessen werden. Dagegen kann der Volumenstrom durch den Filter 11 entweder in Strömungsrichtung davor oder dahinter gemessen werden, da der Punkt, an dem die Messung erfolgt, im vorliegenden Fall keinen Einfluss auf das Messergebnis hat, da hier die Annahme eines inkompressiblen Fuilds gemacht wird.

Zur Messung des Volumenstroms kann z. B. in an sich bekannter Weise der Verlauf der Strömungsgeschwindigkeit durch eine von dem Luftstrom der Staubabsaugung durchströmte Querschnittsfläche gemessen und daraus der Volumenstrom errechnet werden. Dabei kann diese Messung der Strömungsgeschwindigkeit entweder vor dem Filter 11 oder in der Verbindungsleitung 9 zwischen Filter 11 und Lüfter 7 erfolgen. Allerdings kann die Messung des Volumenstroms auch am Auslass 9 des Lüfters 7 stattfinden.

Im vorliegenden Ausführungsbeispiel werden die folgenden. Werte für die relevanten Größen verwendet: $V_{verschmutzt}$ = 200 $m^3/h$, $V_{un-verschmutzt}$ = 400 $m^3/h$, $P_{unverschmutzt}$ = 400 Pa und $P_{verschmutzt}$ = 1800 Pa. Damit ergibt sich x = 0,14 $m^3/Pa$ h.

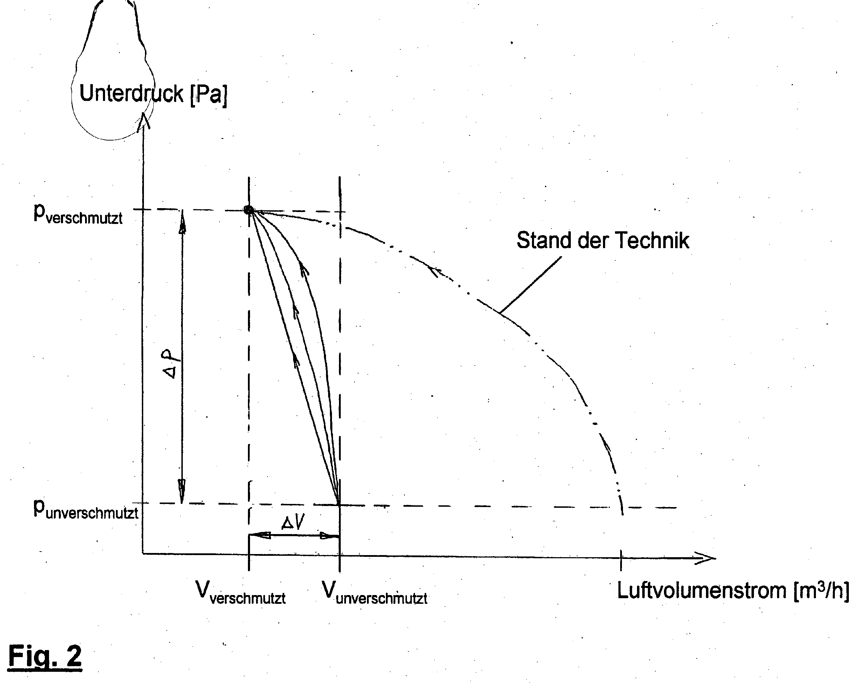

Wenn die Kenngröße x einem Wert kleiner oder gleich 0,15 annimmt, wird, wie in der Grafik in Fig. 2 mit den durchgezogenen Linien wiedergegeben, erreicht, dass die Beziehung zwischen Unterdruck p hinter dem Filter 11 und dem Volumenstrom V durch den Lüfter 7 einen sehr steilen Verlauf hat, wenn der Bereich zwischen $P_{unverschmutzt}$ und $P_{verschmutzt}$ betrachtet wird. Dies hat zur Folge, dass trotz eines erheblichen Anwachsens des Unterdrucks hinter dem Filter 11 in Folge von dessen Verschmutzung nur eine geringe Abnahme des Volumenstromes auftritt. Da aber der Anfangs-Volumenstrom $V_{unverschmutzt}$, d. h. der unmittelbar nach einer Filterreinigung vorliegende Volumenstrom nur so groß dimensioniert ist, dass er ein staubfreies Arbeiten der Kehrsaugmaschine zulässt, erfolgt während des Intervalls zwischen den Filterreinigungsvorgängen eine konstant niedrige Staubzufuhr zum Filter, was eine wesentliche Verlängerung der Filterstandzeit zur Folge hat.

Im Unterschied dazu kommt es bei Staubabsaugungen gemäß dem Stand der Technik, wie in Fig. 2 mit der strichpunktierten Linie dargestellt, zu einem deutlich größeren Volumenstrom bei geringem Druck am Filter, d.h. kurz nach der Reinigung des Filters, was einen erhöhten Staubvolumenstrom und damit eine schnelle Wiederverschmutzung des Filters zur Folge hat.

Die erfindungsgemäße Wahl des Lüfters 7 und ggf. der Verbindungsleitung 9 führt also dazu, dass sich die Intervalle zwischen den Reinigungsvorgängen des Filters 11 verlängern und die Kehrsaugmaschine 1 damit länger ohne eine Unterbrechung betrieben werden kann. Hierbei ist eine Verlängerung der Intervalle auf insgesamt 25 Minuten erreicht worden gegenüber 15 Minuten bei herkömmlichen Systemen.

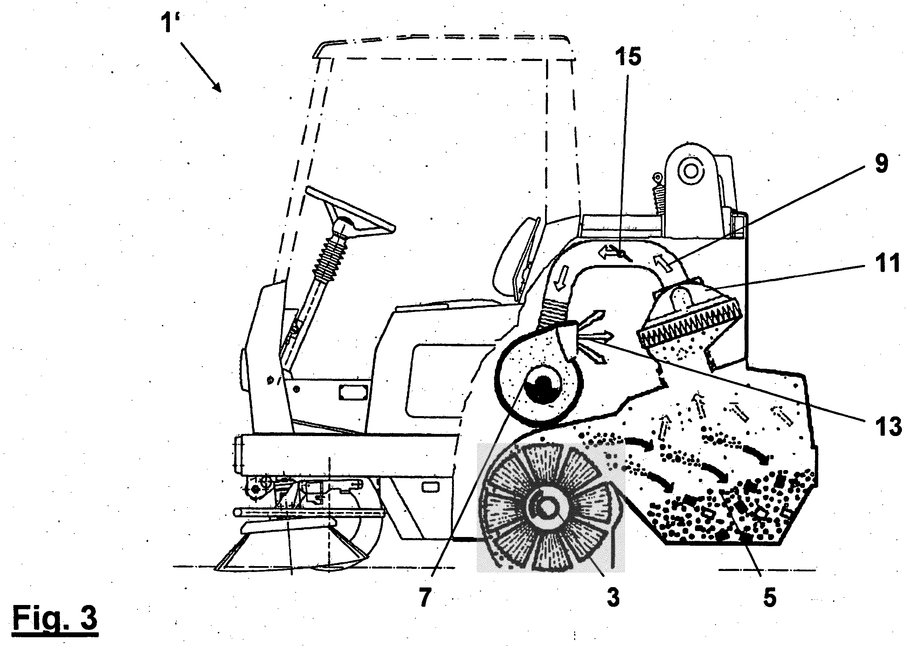

In Fig. 3 ist ein weiteres Ausführungsbeispiel einer erfindungsgemäßen Kehrmaschine 1' dargestellt, das sich von dem in Fig. 1 dadurch unterscheidet, dass in der Verbindungsleitung 9 zwischen dem Filter 11 und dem Lüfter 7 eine Regelklappe 15 vorgesehen ist. Eine steile Kennlinie des Absaugungssystems entsprechend Fig. 2 entsteht durch die Wahl eines entsprechenden Lüfters 7 sowie durch eine entsprechende Gestaltung des Luft-Kanals bzw. der Verbindungsleitung 9 zwischen Filter 11 und Lüfter 7. Um den Volumenstrom darüber hinaus weitgehend konstant zu halten, kann die Regelklappe 15 zur Regelung des Luftstromes in den Verbindungskanal 9 eingebaut sein, wie es das Ausführungsbeispiel einer erfindungsgemäßen Kehrmaschine 1' in Fig. 3 zeigt.

## Patentansprüche

1.  Kehrsaugmaschine mit einer Kehreinrichtung,

    mit einem Kehrbehälter (5) und
    mit einer Staubabsaugung zur Erzeugung einer Luftströmung über der Kehreinrichtung,
    wobei die Staubabsaugung einen Lüfter (7) und einen in Strömungsrichtung vor dem Lüfter (7) angeordneten Filter (11) aufweist, **dadurch gekennzeichnet,**

**dass** der Lüfter (7) derart gewählt ist, dass dessen Kenngröße x,

die das Verhältnis ist aus der Differenz $\Delta V$ zwischen dem Volumenstrom durch den Lüfter (7) bei unverschmutztem Filter (11) und dem Volumenstrom durch den Lüfter (7) bei vollständig verschmutztem Filter (11) und

aus der Differenz $\Delta p$ zwischen dem Unterdruck in Strömungsrichtung hinter dem Filter (11) bei vollständig verschmutztem Filter (11) und dem Unterdruck hinter dem Filter(11) bei unverschmutztem Filter (11),

kleiner oder gleich 0,15 m$^3$/(h·Pa) ist.

2. Kehrsaugmaschine nach Anspruch 1, **dadurch gekennzeichnet, dass** die Kenngröße x kleiner oder gleich 0,1 m$^3$/(h·Pa) ist.

3. Kehrsaugmaschine nach Anspruch 1 oder 2, **dadurch gekennzeichnet, dass** die Staubabsaugung eine Verbindungsleitung (9) zwischen dem Filter (11) und dem Lüfter (7) aufweist,

dass die durchströmte Querschnittsfläche der Verbindungsleitung (9) mittels einer Regelklappe (15) veränderbar ist, wobei

die Regelklappe (15) in der Verbindungsleitung (9) angeordnet ist.

## Claims

1. Suction sweeper with a sweeping device comprising a sweeping container (5) and

a vacuum cleaning unit for generating an air flow above the sweeping device, the vacuum cleaning unit having a fan (7) and a filter (11) arranged in flow direction ahead of the fan (7), **characterised in**

**that** the fan (7) is selected such that its parameter x, which is the ratio of the difference $\Delta V$ between the volume flow through the fan (7) with an uncontaminated filter (11) and the volume flow through the fan (7) with a completely contaminated filter (11) and of the difference $\Delta p$ between the negative pressure in flow direction behind the filter (11) with a completely contaminated filter (11) and the negative pressure behind the filter (11) with an uncontaminated filter (11),

is lower than or equal to 0.15 m$^3$/(h·Pa).

2. Suction sweeper according to claim 1, **characterised in that** the parameter x is lower than or equal to 0.1 m$^3$/(h·Pa).

3. Suction sweeper according to claim 1 or 2, **characterised in that** the vacuum cleaning unit comprises a connection line (9) between the filter (11) and the fan (7),

that the flowed through cross-sectional area of the connection line (9) can be varied by means of a control flap (15),

the control flap (15) being arranged in the connecting line (9).

## Revendications

1. Balayeuse aspirante avec un dispositif de balayage, avec un récipient de balayage (5) et

avec un dispositif d'aspiration de poussière pour la génération d'un écoulement d'air par l'intermédiaire du dispositif de balayage,

le dispositif d'aspiration de poussière comprenant un ventilateur (7) et un filtre (11) disposé avant le ventilateur (7) dans la direction d'écoulement,

**caractérisée en ce que**

le ventilateur (7) est choisi de façon à ce que sa grandeur caractéristique x,

qui est le rapport entre la différence $\Delta V$ entre le débit volumique à travers le ventilateur (7) lorsque le filtre (11) n'est pas encrassé et le débit volumique à travers le ventilateur (7) lorsque le filtre (11) est entièrement encrassé et

entre la différence $\Delta p$ entre la dépression dans la direction d'écoulement derrière le filtre (11) lorsque le filtre (11) est entièrement encrassé et la dépression derrière le filtre (11) lorsque le filtre (11) n'est pas encrassé,

est inférieure ou égale à 0,15 m$^3$/ (h.Pa).

2. Balayeuse aspirante selon la revendication 1, **caractérisée en ce que** la grandeur caractéristique x est inférieure ou égale à 0,1 m$^3$/ (h.Pa).

3. Balayeuse aspirante selon la revendication 1 ou 2, **caractérisée en ce que** le dispositif d'aspiration de poussière comprend une ligne de liaison (9) entre le filtre (11) et le ventilateur (7),

**en ce que** la surface de la section transversale traversée de la ligne de liaison (9) peut être modifiée au moyen d'un clapet de régulation (15),

le clapet de régulation (15) se trouvant dans la ligne de liaison (9).

**Fig. 1**

Luftvolumenstrom [m³/h]

Stand der Technik

Unterdruck [Pa]

$V_{unverschmutzt}$

$\Delta V$

$V_{verschmutzt}$

$\Delta p$

$p_{verschmutzt}$

$p_{unverschmutzt}$

**Fig. 2**

**Fig. 3**

EP 1 985 220 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0799938 A

- US 6117200 A